# EUROPÄISCHE PATENTSCHRIFT

(11) **EP 0 808 765 B1**
(45) Veröffentlichungstag und Bekanntmachung des Hinweises auf die Patenterteilung: **22.03.2000**
(21) Anmeldenummer: 97106331.8
(22) Anmeldetag: 17.04.1997
(51) Int. Cl.: B62D 25/08, B60R 19/30

(54) **Verkleidungsteil aus nachgiebigem Werkstoff für einen Endbereich eines Fahrzeuges, insbesondere Personenkraftwagens**
Covering part made of plastic material for an end region of a vehicle, particularly a passenger car
Elément de carrosserie en matière plastique pour une section terminale d'un véhicule, notamment d'une voiture particulière

(30) Priorität: 21.05.1996 DE 19620404
(43) Veröffentlichungstag der Anmeldung: 26.11.1997
(73) Patentinhaber: Dr.Ing.h.c. F. Porsche Aktiengesellschaft, 70435 Stuttgart (DE)
(72) Erfinder: Rinklin, Gerhard, 75233 Tiefenbronn (DE)

(56) Entgegenhaltungen:
- EP-A- 0 594 955
- DE-A- 2 452 337
- DE-A- 4 034 394

## Beschreibung

Die Erfindung betrifft ein Verkleidungsteil aus nachgiebigem Werkstoff für einen Endbereich eines Fahrzeuges, insbesondere Personenkraftwagens, gemäß dem Oberbegriff des Patentanspruchs 1.

Bei einem bekannten Serienfahrzeug mit Heckmotor (Porsche 911) ist das heckseitige Stoßfänger-Verkleidungsteil mit seitlich außenliegenden, längsgerichteten Abschnitten bis zu den angrenzenden Radhäusern des Aufbaus herangeführt.

Ein oberer Randbereich des längsgerichteten Abschnitts des Verkleidungsteiles ist unter Zwischenschaltung einer Schiene am angrenzenden darüberliegenden Fondseitenteil mittels mehrerer Befestigungsschrauben in Lage gehalten. Zur Fixierung des unteren Randbereichs sind zwei um die Abgasanlage herumgeführte gebogene Rohrbügel aus Blech vorgesehen, die oberhalb der Abgasanlage am Aufbau befestigt sind.

Auf horizontal abgestellte untere Endbereiche der Rohrbügel wird von unten das Verkleidungsteil aufgesetzt und mittels Befestigungsschrauben in Lage gehalten. Zur Auskleidung der Innenseite des Radhauses sind separat hergestellte Radhausschalen vorgesehen, die über Befestigungselemente an angrenzenden Aufbauteilen in Lage gehalten sind.

Dieser Anordnung haftet der Nachteil an, daß zur Festlegung der seitlich außenliegenden längsgerichteten Abschnitte des Verkleidungsteiles eine Vielzahl von Teilen erforderlich sind, die eine zeit- und kostenintensive Montage und Toleranzprobleme verursachen.

Aufgabe der Erfindung ist es, die Befestigung der seitlich außenliegenden längsgerichteten Abschnitte des endseitigen Verkleidungsteiles so weiterzubilden, daß bei vereinfachter Montage die Teilezahl verringert und die Toleranzen besser aufgenommen werden. Zudem soll der Aufwand für die Ausbildung und die Befestigung der inneren Radhausschalen verringert werden.

Erfindungsgemäß wird diese Aufgabe durch die Merkmale des Anspruchs 1 gelöst. Weitere, die Erfindung in vorteilhafter Weise ausgestaltende Merkmale beinhalten die Unteransprüche.

Die mit der Erfindung hauptsächlich erzielten Vorteile sind darin zu sehen, daß durch die Anordnung von an jeder Längsseite des Fahrzeugs benachbart dem Radhaus vorgesehener Halter aus Kunststoff, welche gleichzeitig zur Befestigung des oberen Randbereiches und des unteren Randbereiches der längsgerichteten Abschnitte des Verkleidungsteiles dienen, die Anzahl der Teile wesentlich verringert werden und die Montage spürbar erleichtert wird. Die Toleranzempfindlichkeit wird zudem herabgesetzt. Mittels der Halter erfolgt eine obere Klemm- und eine untere Schraubbefestigung der längsgerichteten Abschnitte des endseitigen Verkleidungsteiles. Da die Halter zudem Teilradhausschalen bilden, wird der Aufwand für die Ausbildung und Befestigung der inneren Radhausschalen herabgesetzt.

Die integrierte Teilradhausschale schützt dahinterliegende Bauteile, wie z.B. eine Abgasanlage, einen OBDII Sensor mit Kabelanschluß, ein Innenraum-Entlüftungsgehäuse und abschnittsweise die Karosserie-Lackierung vor Steinschlag und Spritzwasserbeaufschlagung und wirkt darüber hinaus geräuschdämmend.

Ferner wird die Optik im Radhaus wesentlich verbessert. Über an der Teilradhausschale vorgesehene Enlüftungsschlitze kann die aus dem Fahrzeuginnenraum austretende Luft ins Freie entweichen.

Die Multifunktionsteile bildenden Halter aus Kunststoff lassen sich einfach und kostengünstig herstellen und über mehrere Befestigungsstellen schnell und einfach am feststehenden Aufbau montieren.

Ein Ausführungsbeispiel der Erfindung ist in der Zeichnung dargestellt und wird im folgenden näher erläutert.

Es zeigen
- Fig. 1: eine perspektivische Teilansicht auf den Heckbereich eines Personenkraftwagens,
- Fig. 2: eine perspektivische Teilansicht von vorne auf einen Teilbereich des hinteren Radhauses ohne das Rad,
- Fig. 3: in Explosionsdarstellung den Heckbereich des Personenkraftwagens mit dem montierten Stoßfängerträger und dem noch nicht montierten seitlichen Halter für das Verkleidungsteil,

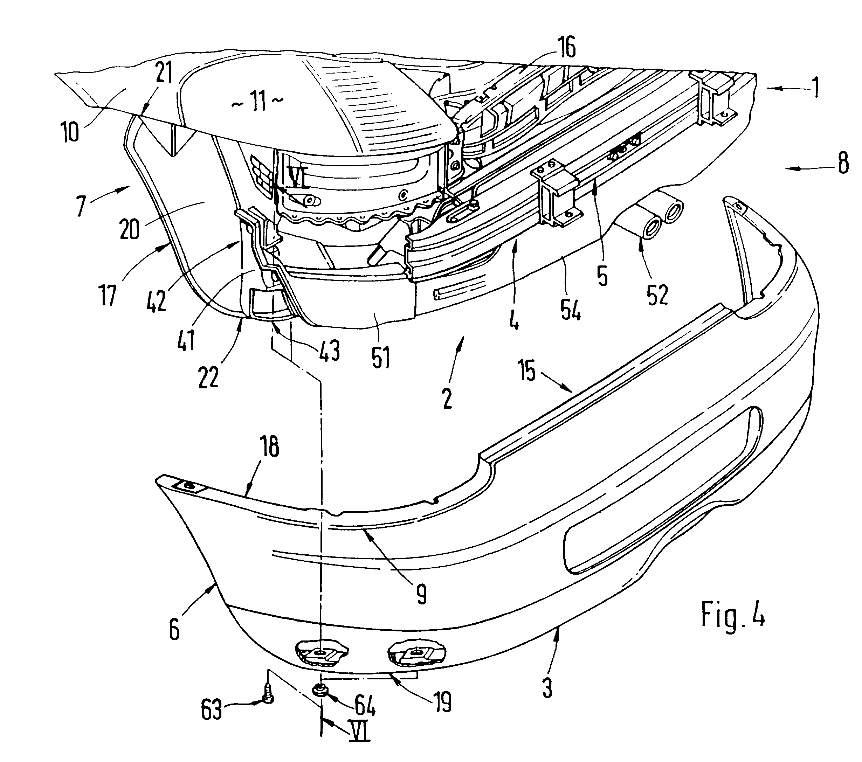

- Fig. 4: in Explosionsdarstellung den Heckbereich des Personenkraftwagens mit dem montierten Stoßfängerträger, dem montierten seitlichen Halter und dem noch nicht montierten heckseitigen Verkleidungsteil,
- Fig. 5: einen Schnitt nach der Linie V-V der Fig. 1 in größerer Darstellung,
- Fig. 6: einen Schnitt nach der Linie VI-VI der Fig. 4 in größerer Darstellung,
- Fig. 7: einen Schnitt nach der Linie VII-VII der Fig. 2 in größerer Darstellung,

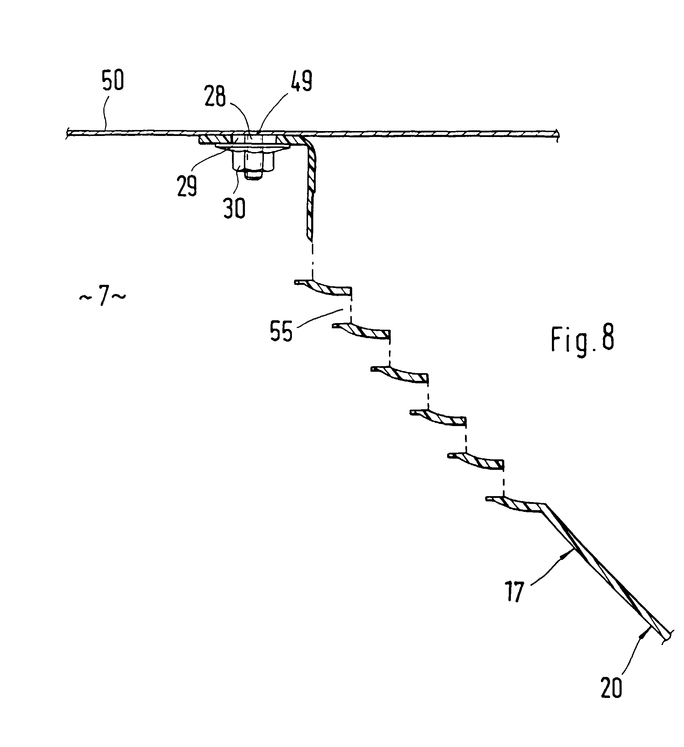

- Fig. 8: einen Schnitt nach der Linie VIII-VIII der Fig. 2 in größerer Darstellung und

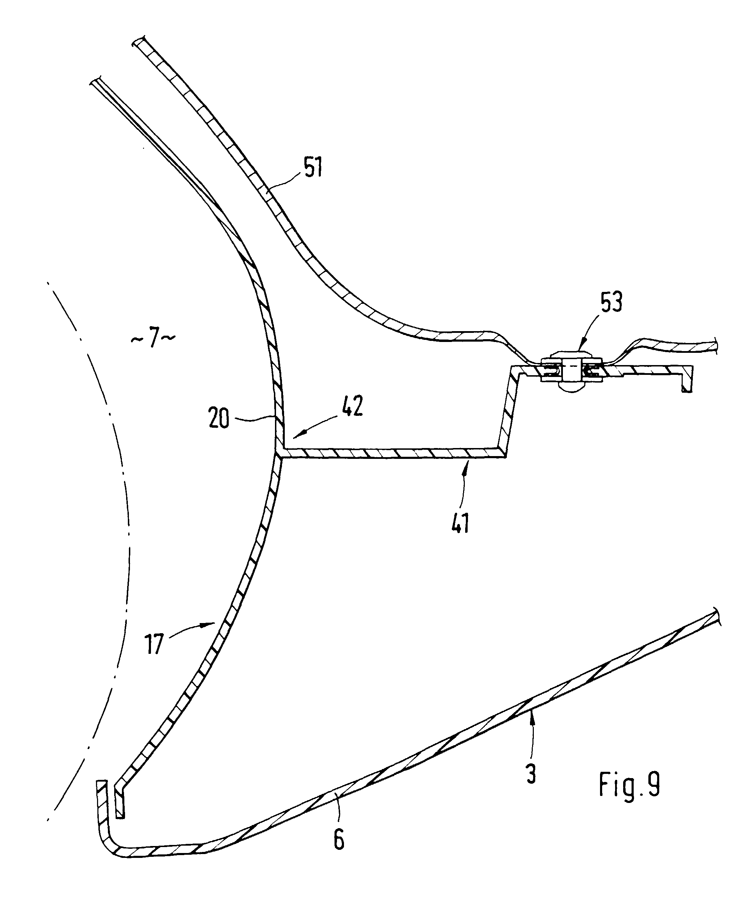

- Fig. 9: einen Schnitt nach der Linie IX-IX der Fig. 2 in größerer Darstellung.

Ein durch einen Personenkraftwagen 1 gebildetes Fahrzeug weist in einem Endbereich 2 ein großflächiges Verkleidungsteil 3 aus einem nachgiebigen Werkstoff auf, das am angrenzenden Aufbau 4 lösbar in Lage gehalten ist. Das aus einem geeigneten Kunststoff gefertigte Verkleidungsteil 3 deckt einen dahinterliegenden aufbauseitig abgestützten, querverlaufenden Stoßfängerträger 5 sowie die Karosserie-Rohbaustruktur, Aggregate und Montageelemente ab und bildet bereichsweise die Karosserieaußenhaut.

Das Verkleidungsteil 3 erstreckt sich über die gesamte Breite des Fahrzeuges und ist mit seitlich außenliegenden, längsgerichteten Abschnitten 6 bis zu einem angrenzenden Radhaus 7 herangeführt.

Im Ausführungsbeispiel ist ein Heckbereich 8 des Fahrzeuges dargestellt. Der obere Rand 9 des Verkleidungsteiles 3 ist im Bereich des seitlich außenliegenden Abschnitts 6 an ein Fondseitenteil 10 und eine angrenzende Heckleuchte 11 angeschlossen.

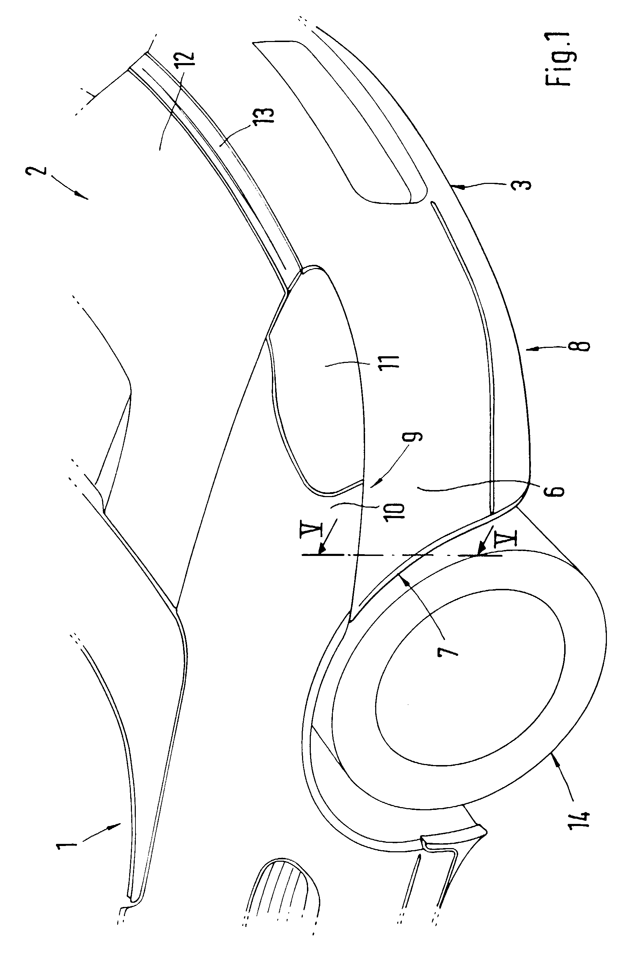

Zwischen den beiden beabstandeten Heckleuchten 11 ist das Verkleidungsteil 3 an eine hintere Haube 12 bzw. eine heckseitige Luftleitvorrichtung 13 angeschlossen. Ferner ist in Fig. 1 ein hinteres Rad 14 dargestellt, das sich innerhalb des Radhauses 7 erstreckt. Das Verkleidungsteil 3 könnte jedoch auch einem nicht näher dargestellten Bugendbereich zugeordnet sein.

In einem mittleren Bereich 15 der Quererstreckung des Verkleidungsteils 3 ist ein oberer, etwa horizontal abgestellter Rand des Verkleidungsteiles 3 an einer querverlaufenden aufbauseitigen Halteleiste 16 mittels schraubbarer Befestigungselemente in Lage gehalten (nicht näher dargestellt).

Unterhalb der beiden Heckleuchten 11 erfolgt abschnittsweise eine Steckbefestigung des oberen Randes des Verkleidungsteiles 3 am Aufbau 4 (ebenfalls nicht dargestellt).

Zur Festlegung der beiden seitlich außenliegenden, längsgerichteten Abschnitte 6 des Verkleidungsteiles 3 ist an jeder Fahrzeuglängsseite benachbart eines hinteren Randes des Radhauses 7 ein aus Kunststoff gefertigter, am angrenzenden Aufbau 4 befestigter Halter 17 vorgesehen, der gleichzeitig zur Festlegung eines oberen Randbereiches 18 und eines unteren Randbereiches 19 der längsgerichteten Abschnitte 6 dient, wobei der Halter 17 zugleich eine Teilradhausschale 20 bildet. Der großflächige Halter 17 ist aus thermoplastischem Kunststoff, beispielsweise aus glasfaserverstärktem Polypropylen gefertigt und wird im Spritzgießverfahren hergestellt. Der Halter 17 und die Teilradhausschale 20 sind einstückig ausgebildet. Es besteht aber auch die Möglichkeit den Halter 17 aus duroplastischem Werkstoff im Schäumverfahren herzustellen (z.B. aus Polyurethan).

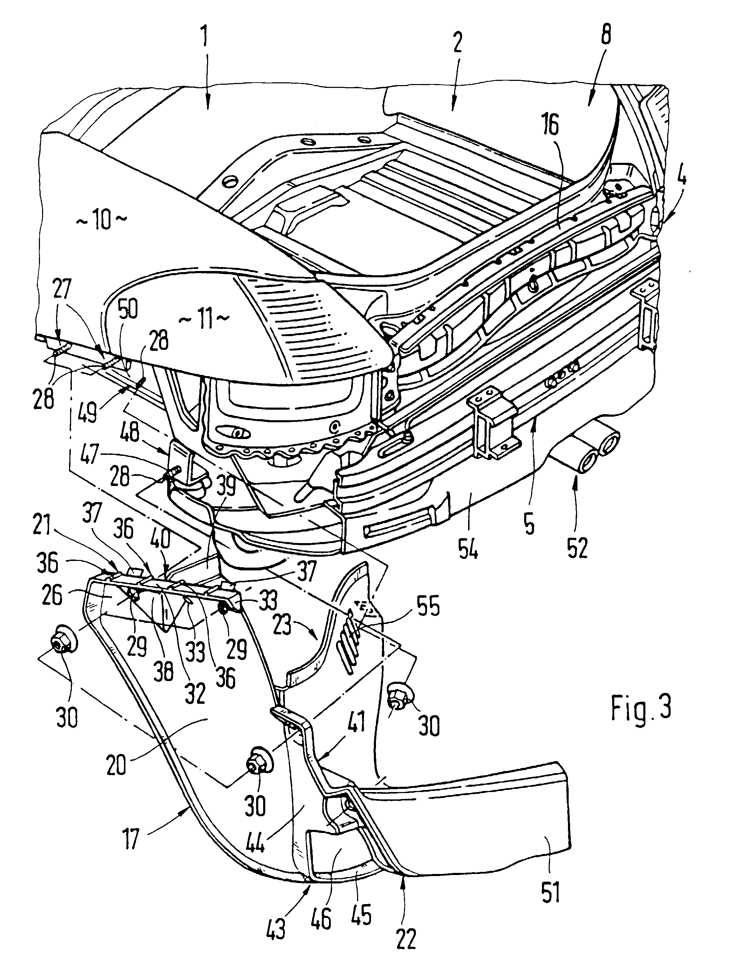

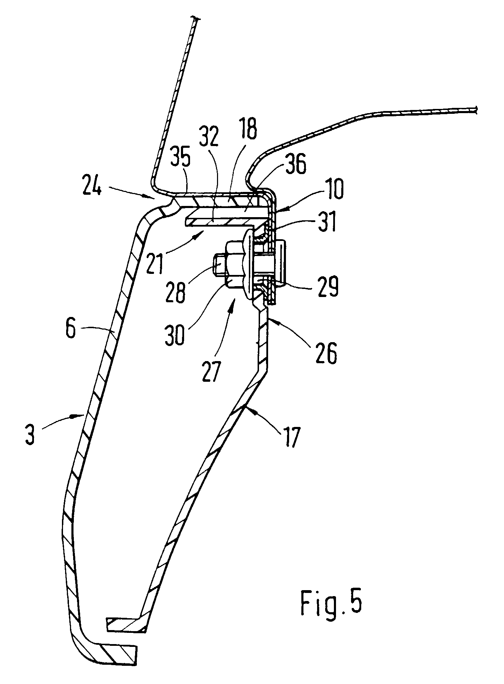

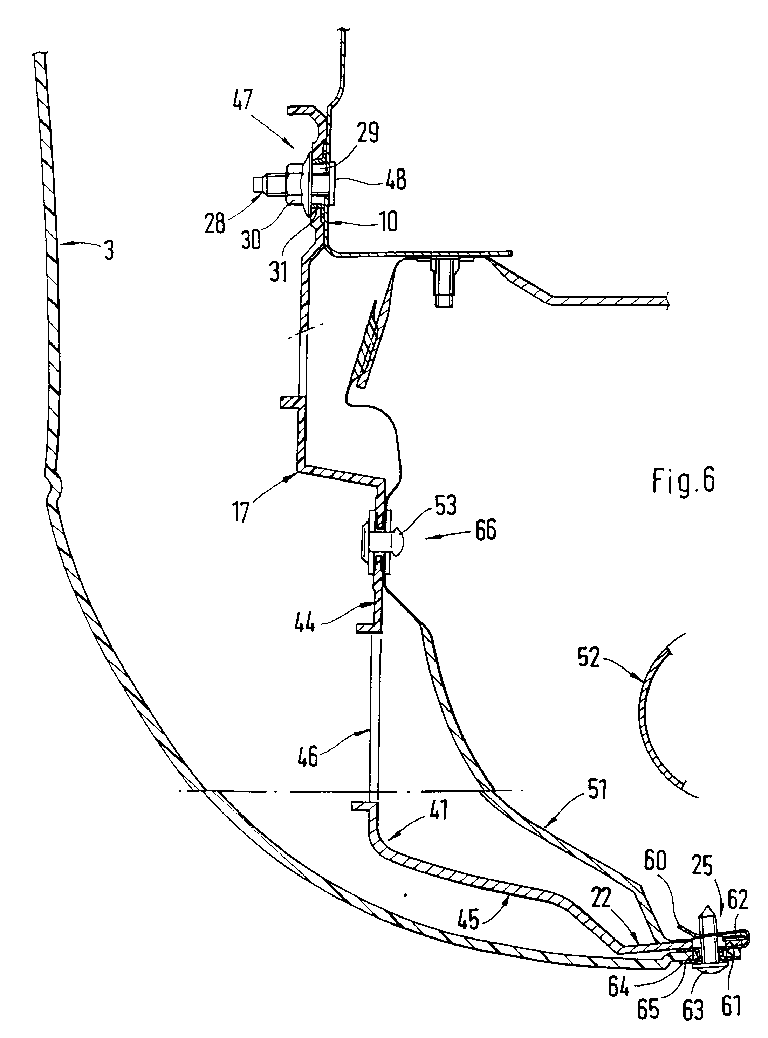

Im Ausführungsbeispiel ist der Halter 17 einem heckseitigen Verkleidungsteil 3 zugeordnet und bildet zugleich eine hintere untenliegende Teilradhausschale 20. Das restliche Radhaus 7 kann mit einer weiteren inneren Radhausschale verkleidet werden oder freiliegen. Die Teilradhausschale 20 erstreckt sich zwischen einem oberen Halteabschnitt 21 und einem unteren Halteabschnitt 22 des Halters 17. Im Bereich des Halteabschnitts 21 ist die Teilradhausschale 20 weiter nach oben gezogen als in einem benachbarten Bereich 23. Das Verkleidungsteil 3 steht im Bereich des oberen Halteabschnitts 21 über eine Klemmbefestigung 24 und im Bereich des unteren Halteabschnitts 22 über eine Schraubbefestigung 25 mit dem Halter 17 in Wirkverbindung (Fig. 5 und 6). Der langgestreckte Halteabschnitt 21 des Halters 17 ist in Fahrzeuglängsrichtung ausgerichtet und im Querschnitt gesehen winkelförmig profiliert (Fig. 3).

Ein erster aufrechter Schenkel 26 des Halteabschnitts 21 ist abschnittsweise an die Teilradhausschale 20 angebunden und liegt bei montiertem Halter 17 mit seiner Innenseite an der Außenseite des Fondseitenteils 10 an und ist dort über schraubbare Befestigungen 27 in Lage gehalten.

Hierzu sind am Fondseitenteil 10 nach außen ragende Gewindebolzen 28 angebracht, die durch Öffnungen 29 des ersten Schenkels 26 hindurchragen. Von der Außenseite her wird auf das freie Ende jedes Gewindebolzens 28 eine Bundmutter 30 aufgedreht.

Im Bereich der Öffnung 29 des Schenkels 26 ist eine Distanzhülse 31 angeordnet, wodurch im Fahrbetrieb ein Lösen der Verbindung (Kunststoffkriechen) verhindert wird. Die Distanzhülse 31 ist in die Öffnung 29 eingedrückt oder sie wird bei der Herstellung des Halters 17 in das Werkzeug eingelegt und dann umspritzt (Fig. 5). Zum Toleranzausgleich weisen die Öffnungen 29 einen wesentlich größeren Durchmesser auf als der Durchmesser des Gewindebolzens 28 (Einstellbarkeit).

Der andere etwa horizontal ausgerichtete Schenkel 32 des oberen Halteabschnitts 21 verläuft etwa rechtwinkelig zum aufrechten Schenkel 26. Zur Versteifung des Halteabschnitts 21 erstrecken sich zwischen beiden Schenkeln 26, 32 örtlich Stützstege 33.

Der obere etwa horizontal ausgerichtete Randbereich 18 des längsgerichteten Abschnitts 6 des Verkleidungsteiles 3 ist zwischen einem nach innen abgestellten Flansch 35 des Aufbaus 4 (Fondseitenteil 10) und dem gleichgerichteten beabstandeten Schenkel (32) des oberen Halteabschnitts 21 klemmend in Lage gehalten.
Die Unterseite des oberen Randbereiches 18 liegt nur örtlich auf querverlaufenden vorstehenden Rippen 36 des Schenkels 32 auf. Vorstehende Distanzelemente 37 an der Oberseite des Schenkels 32 sorgen bei der Montage des Halters 17 dafür, daß dieser lagerichtig zum Fondseitenteil 10 ausgerichtet ist.

Zur Vermeidung von Scheuerstellen ist zwischen der Außenseite des Flansches 35 und der Oberseite des Randbereiches 18 des Abschnitts 6 eine dünne Lackschutzfolie vorgesehen, die wahlweise an einem der beiden Teile angebracht werden kann.

Der obere Halteabschnitt 21 ist über einen längsverlaufenden Abschnitt 38 und einen querverlaufenden Abschnitt 39 an die Teilradhausschale 20 angeschlossen. Eine Aussparung 40 an der Oberseite des querverlaufenden Abschnitts 39 dient als Montagehilfe für den Halter 17.

Der untere Halteabschnitt 22 ist über einen Versteifungsrahmen 41 an die Rückseite 42 bzw. den unteren Rand 43 der Teilradhausschale 20 angeschlossen, wobei sich der Versteifungsrahmen 41 aus winkelig aneinander gesetzten Wandabschnitten 44, 45 zusammengesetzt ist, die aus Gewichtsersparnisgründen eine örtliche Aussparung 46 aufweisen. Der Wandabschnitt 44 erstreckt sich in aufrechter Richtung und geht im unteren Bereich bogenförmig in den anderen Wandabschnitt 45 über.

Jeder Halter 17 ist neben den beiden oberen Befestigungen 27 am Fondseitenteil 10 über ähnlich ausgebildete Befestigungen bei 47 am Boden 48 und bei 49 am Längsträger hinten 50 aufbauseitig festgelegt, wobei der Halter 17 über Öffnungen 29 von außen auf querverlaufende vorstehende Gewindebolzen 28 aufgeschoben wird. Danach werden die Bundmuttern 30 aufgeschraubt.

Auf der dem Verkleidungsteil 3 abgekehrten Seite des Halters 17 ist ein seitliches Wärmeabschirmblech 51 für die benachbart angeordnete Abgasanlage 52 angebracht, wobei das Wärmeabschirmblech 51 mit dem Halter 17 eine vormontierte Baueinheit bildet.

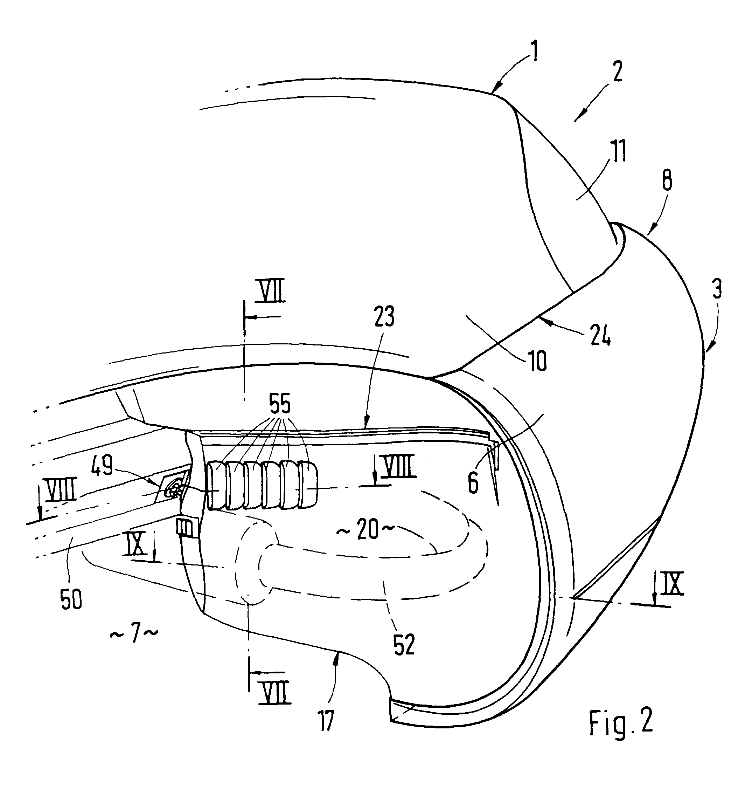

Das seitliche Abschirmblech 51 ist in eingebauter Lage an ein querverlaufendes hinteres Abschirmblech 54 angeschlossen, das an sich von der Unterseite des Stoßfängerträgers 5 nach unten hin erstreckt und mit diesem eine vorgefertigte Einheit bildet. Benachbart der vorderen Anbindung 49 der Teilradhausschale 20 an den Aufbau sind an dieser örtlich mehrere Entlüftungsschlitze 55 ausgebildet, durch die die aus dem Fahrzeuginnenraum austretende Luft ins Freie entweichen kann. Die Entlüftungsschlitze 55 sind in Längsrichtung gesehen hintereinanderliegend angeordnet und erstrecken sich etwa in gleicher Höhe (Fig. 2).

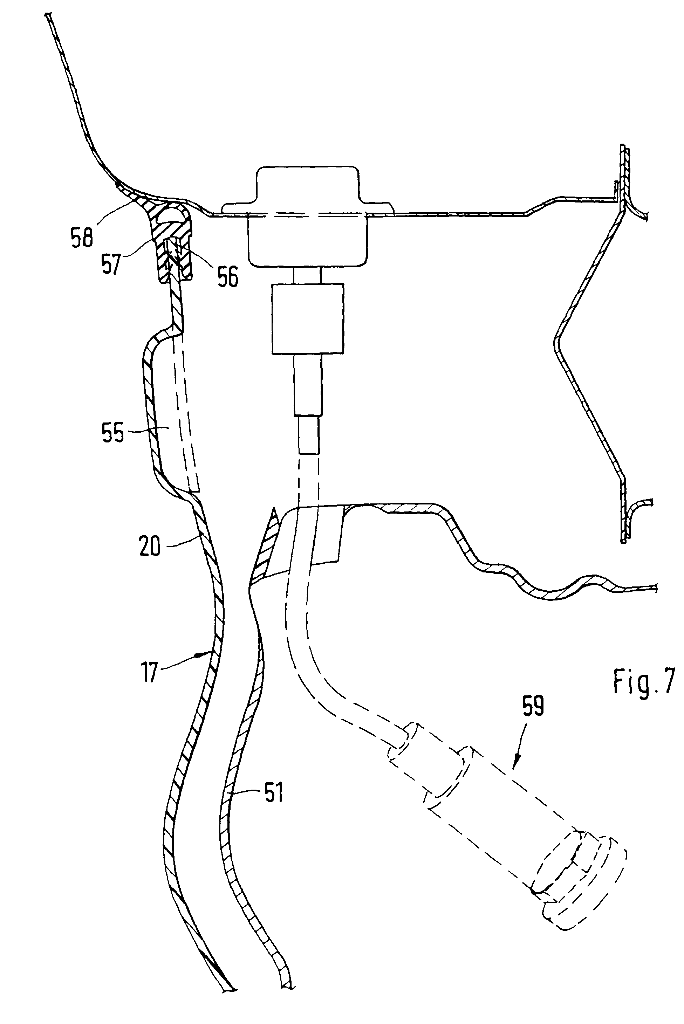

Gemäß Fig. 7 ist auf den oberen Rand 56 der Teilradhausschale 20 ein Dichtkörper 57 aufgesteckt, der sich mit einer Dichtlippe 58 am darüberliegenden aufbauseitigen Radkasten abstützt. Der Dichtkörper 57 könnte jedoch auch an die Teilradhausschale 20 angespritzt sein (einstückige Ausbildung, Zweikomponentenbauweise).

Durch das Wärmeabschirmblech 51 wird das außenliegende Verkleidungsteil 3 vor überhöhter Hitzebeaufschlagung geschützt. Die Teilradhausschale 20 schützt eine dahinterliegende OBDII Sonde 59 samt Kabel und Steckverbindung vor Steinschlag und Spritzwasserbeaufschlagung. Ferner wird die Optik im Radhausbereich verbessert und die Abgasanlage 52 sowie die Karosserielackierung/PVC-Beschichtung durch die integrierte Teilradhausschale 20 vor Steinschlag- und Spritzwasserbeaufschlagung geschützt.

Fig. 6 zeigt die Befestigung des Wärmeabschirmbleches 51 am Halter 17 mittels eines bei 66 angeordneten Niets 53 sowie durch zwei untenliegende Schraubbefestigungen 25.

Jede Schraubbefestigung 25 umfaßt eine Gewindemutter 60, die auf einen unteren Randbereich 61 des Wandabschnitts 45 und eines gleichgerichteten Randbereiches 62 des Wärmeabschirmbleches 51 aufgesteckt ist.

In die Gewindemutter 60 wird von unten eine Befestigungsschraube 63 eingedreht, die sich an einer Distanzhülse 64 abstützt, welche durch eine Öffnung 65 des Verkleidungsteils 3 eingesetzt ist. An den Randbereichen 61, 62 sind ebenfalls Öffnungen zum Hindurchführen der Befestigungsschraube 63 vorgesehen.

Die aufgesetzten Gewindemuttern 60 bewirken eine Vormontage von Halter 17 und Wärmeabschirmblech 51.

Nach dem Eindrehen der Befestigungsschrauben 63 wird außerdem das Verkleidungsteil 3 am Halter 17 in Lage gehalten.

Benachbart der Klemmverbindung 24 ist das Verkleidungsteil auf der dem Radhaus zugekehrten Seite über eine zusätzliche Schraubverbindung (nicht näher dargestellt) am Fondseitenteil 10 arretiert.

## Patentansprüche

1. Verkleidungsteil aus nachgiebigem Werkstoff für einen Endbereich eines Fahrzeuges, insbesondere Personenkraftwagen, das abschnittsweise die Karosserieaußenhaut bildet und mit seitlich außenliegenden, längsgerichteten Abschnitten an angrenzende Radhäuser des Aufbaus herangeführt ist, dadurch gekennzeichnet, daß an jeder Längsseite des Fahrzeuges (1) benachbart dem Radhaus (7) ein aus Kunststoff hergestellter, aufbauseitig befestigter Halter (17) vorgesehen ist, der gleichzeitig zur Befestigung des oberen Randbereiches (18) und des unteren Randbereiches (19) der längsgerichteten Abschnitte (6) des Verkleidungsteiles (3) herangezogen wird und daß der Halter (17) außerdem eine Teilradhausschale (20) bildet.

2. Verkleidungsteil nach Anspruch 1, dadurch gekennzeichnet, daß der Halter (17) aus thermoplastischem Kunststoff besteht und im Spritzgießverfahren hergestellt ist.

3. Verkleidungsteil nach Anspruch 1, dadurch gekennzeichnet, daß der Halter (17) aus duroplastischem Kunststoff im Schäumverfahren gefertigt ist.

4. Verkleidungsteil nach den Ansprüchen 1 bis 3, dadurch gekennzeichnet, daß der Halter (17) und die Teilradhausschale (20) einstückig ausgebildet sind.

5. Verkleidungsteil nach den Ansprüchen 1 bis 4, dadurch gekennzeichnet, daß der Halter (17) einem heckseitigen Verkleidungsteil (3) zugeordnet ist und sich die Teilradhausschale (20) in einem hinteren, unteren Endbereich des Radhauses (7) erstreckt.

6. Verkleidungsteil nach Anspruch 1, dadurch gekennzeichnet, daß am Halter (17) obere Halteabschnitte (21) und beabstandete untere Halteabschnitte (22) ausgebildet sind, wobei sich zwischen den Halteabschnitten (21, 22) die aufrechte, querverlaufende Teilradhausschale (20) erstreckt.

7. Verkleidungsteil nach einem oder mehreren der vorangegangenen Ansprüche, dadurch gekennzeichnet, daß das Verkleidungsteil (3) über eine Klemmbefestigung (24) und/oder eine Schraubbefestigung (25) mit dem Halter (17) in Wirkverbindung steht.

8. Verkleidungsteil nach einem oder mehreren der vorangegangenen Ansprüche, dadurch gekennzeichnet, daß im Bereich des oberen Halteabschnittes (21) die Klemmbefestigung (24) des Verkleidungsteiles vorgesehen ist.

9. Verkleidungsteil nach einem oder mehreren der vorangegangenen Ansprüche, dadurch gekennzeichnet, daß der etwa horizontal ausgerichtete obere Randbereich (18) des längsgerichteten Abschnitts (6) des Verkleidungsteiles (3) zwischen einem nach innen abgestellten Flansch (35) des Aufbaus (4) und einem gleichgerichteten, beabstandeten Schenkel (32) des oberen Halteabschnittes (21) klemmend in Lage gehalten ist.

10. Verkleidungsteil nach Anspruch 9, dadurch gekennzeichnet, daß die Unterseite des oberen Randbereiches (18) nur örtlich auf querverlaufenden vorstehenden Rippen (36) des Schenkels (32) aufliegt.

11. Verkleidungsteil nach einem oder mehreren der vorangegangenen Ansprüche, dadurch gekennzeichnet, daß der obere Halteabschnitt (21) im Querschnitt etwa winkelförmig profiliert ist, wobei die beiden etwa rechtwinkelig zueinander verlaufenden Schenkel (26, 32) örtlich durch querverlaufende Stützstege (33) miteinander verbunden sind.

12. Verkleidungsteil nach einem oder mehreren der vorangegangenen Ansprüche, dadurch gekennzeichnet, daß der untere Halteabschnitt (22) über einen Versteifungsrahmen (41) an die Rückseite (42) bzw. den unteren Rand (43) der Teilradhausschale (20) angeschlossen ist.

13. Verkleidungsteil nach einem oder mehreren der vorangegangenen Ansprüche, dadurch gekennzeichnet, daß an der dem Verkleidungsteil (3) abgekehrten Seite des Halters (17) ein seitliches Wärmeabschirmblech (51) für die benachbart angeordnete Abgasanlage (52) angebracht ist.

14. Verkleidungsteil nach Anspruch 13, dadurch gekennzeichnet, daß das Wärmeabschirmblech (51) mit dem Halter (17) verbunden ist und eine vormontierte Baueinheit bildet.

15. Verkleidungsteil nach einem oder mehreren der vorangegangenen Ansprüche, dadurch gekennzeichnet, daß an der Teilradhausschale (20) örtlich Entlüftungsschlitze (55) ausgebildet sind, durch die die aus dem Fahrzeuginnenraum austretende Luft ins Freie entweicht.

16. Verkleidungsteil nach einem oder mehreren der vorangegangenen Ansprüche, dadurch gekennzeichnet, daß auf den oberen Rand (56) der Teilradhausschale (20) ein Dichtkörper (57) aufgesteckt ist, der sich mit einer Dichtlippe (58) am darüberliegenden aufbauseitigen Radkasten abstützt.

17. Verkleidungsteil nach Anspruch 16, dadurch gekennzeichnet, daß der Dichtkörper (57) an die Teilradhausschale (20) angespritzt ist.

## Claims

1. A panelling part of resilient material for an end region of a vehicle, in particular a passenger vehicle, forming in part the outer skin of the bodywork and extending to adjacent wheel arches of the body with longitudinally orientated portions situated laterally on the outside, **characterized in that** a retaining means (17) produced from plastics material and secured to the body is provided on each longitudinal side of the vehicle (1) adjacent to the wheel arch (7) and is used at the same time to secure the upper edge region (18) and the lower edge region (19) of the longitudinally orientated portions (6) of the panelling part (3), and the retaining means (17) additionally forms a partial wheel-arch liner (20).

2. A panelling part according to Claim 1, **characterized in that** the retaining means (17) consists of thermoplastic plastics material and is produced in the injection-moulding process.

3. A panelling part according to Claim 1, **characterized in that** the retaining means (17) is produced from duroplastic plastics material in the foaming process.

4. A panelling part according to Claims 1 to 3, **characterized in that** the retaining means (17) and the partial wheel-arch liner (20) are constructed in one piece.

5. A panelling part according to Claims 1 to 4, **characterized in that** the retaining means (17) is associated with a panelling part (3) at the rear, and the partial wheel-arch liner (20) extends in a rear, lower end region of the wheel arch (7).

6. A panelling part according to Claim 1, **characterized in that** upper retaining portions (21) and spaced lower retaining portions (22) are formed on the retaining means (17), wherein the upright, transversely extending partial wheel-arch liner (20) extends between the retaining portions (21, 22).

7. A panelling part according to one or more of the preceding Claims, **characterized in that** the panelling part (3) is operatively connected to the retaining means (17) by way of a clamping fastening (24) and/or a screw fastening (25).

8. A panelling part according to one or more of the preceding Claims, **characterized in that** the clamping fastening (24) of the panelling part is provided in the region of the upper retaining portion (21).

9. A panelling part according to one or more of the preceding Claims, **characterized in that** the upper edge region (18) - orientated substantially horizontally - of the longitudinally orientated portion (6) of the panelling part (3) is held clamped in position between an inwardly projecting flange (35) of the body (4) and a spaced arm (32) of the upper retaining portion (21) orientated in the same direction.

10. A panelling part according to Claim 9, **characterized in that** the underside of the upper edge region (18) rests only in part upon transversely extending, projecting ribs (36) of the arm (32).

11. A panelling part according to one or more of the preceding Claims, **characterized in that** the upper retaining portion (21) is profiled substantially in an angular manner in cross-section, wherein the two arms (26, 32) extending substantially at a right angle to each other are connected to each other in part by transversely extending support webs (33).

12. A panelling part according to one or more of the preceding Claims, **characterized in that** the lower retaining portion (22) is attached by way of a reinforcement frame (41) to the rear side (42) or the lower edge (43) of the partial wheel-arch liner (20).

13. A panelling part according to one or more of the preceding Claims, **characterized in that** a lateral heat-shield panel (51) for the exhaust system (52) situated adjacent thereto is arranged on the side of the retaining means (17) remote from the panelling part (3).

14. A panelling part according to Claim 13, **characterized in that** the heat-shield panel (51) is connected to the retaining means (17) and forms a pre-assembled structural unit.

15. A panelling part according to one or more of the preceding Claims, **characterized in that** venting slots (55), through which the air emerging from the interior of the vehicle escapes into the open air, are formed locally on the partial wheel-arch liner (20).

16. A panelling part according to one or more of the preceding Claims, **characterized in that** a sealing body (57), which is supported with a sealing lip (58) on the wheel arch situated thereabove on the body, is attached to the upper edge (56) of the partial wheel-arch liner (20).

17. A panelling part according to Claim 16, **characterized in that** the sealing body (57) is injection-moulded onto the partial wheel-arch liner (20).

## Revendications

1. Elément de revêtement en matière plastique souple pour une partie terminale d'un véhicule automobile, notamment une voiture de tourisme, qui forme par endroits l'enveloppe extérieure de la carrosserie qui par des sections situées latéralement à l'extérieur et orientées longitudinalement s'approche des logements de roue adjacents de la carrosserie, caractérisé en ce que sur chaque côté longitudinal du véhicule (1), au voisinage du logement de roue (7), est prévu un support (17) en matière plastique, fixé à la carrosserie, qui est utilisé en même temps pour la fixation de la zone de bordure supérieure (18) et de la zone de bordure inférieure (19) des sections (6) orientées longitudinalement de l'élément de revêtement (3) et en ce que le support (17) forme en outre une coque partielle (20) pour le logement de roue.

2. Elément de revêtement selon la revendication 1, caractérisé en ce que le support (17) est en matière thermoplastique et est fabriqué par un procédé de moulage par injection.

3. Elément de revêtement selon la revendication 1, caractérisé en ce que le support (17) est en matière thermodurcissable et est fabriqué par un procédé de moussage.

4. Elément de revêtement selon les revendications 1 à 3, caractérisé en ce que le support (17) et la coque partielle (20) du logement de roue sont réalisés d'un seul tenant.

5. Elément de revêtement selon les revendications 1 à 4, caractérisé en ce que le support (17) est affecté à un élément de revêtement (3) arrière et en ce que la coque partielle (20) du logement de roue s'étend dans une partie terminale arrière et inférieure du logement de roue (7).

6. Elément de revêtement selon la revendication 1, caractérisé en ce que sur le support (17) sont formées des sections de maintien supérieures (21) et des sections de maintien inférieures (22) espacées, la coque partielle (20) du logement de roue qui est verticale et s'étend transversalement passe entre les sections de maintien (21, 22).

7. Elément de revêtement selon une ou plusieurs des revendications précédentes, caractérisé en ce que l'élément de revêtement (3) est en liaison active avec le support (17) par une fixation par serrage (24) et/ou une fixation par vissage (25).

8. Elément de revêtement selon une ou plusieurs des revendications précédentes, caractérisé en ce que la fixation par serrage (24) de l'élément de revêtement est prévue dans la zone de la section de maintien supérieure (21).

9. Elément de revêtement selon une ou plusieurs des revendications précédentes, caractérisé en ce que la zone de bordure supérieure (18), qui est orientée à peu près horizontalement, de la section (6) orientée longitudinalement de l'élément de revêtement (3), est immobilisée par serrage entre une bride (35) déviée vers l'intérieur de la carrosserie (4) et une branche (32) orientée dans le même sens et espacée de la section de maintien supérieure (21).

10. Elément de revêtement selon la revendication 9, caractérisé en ce que la face inférieure de la zone de bordure supérieure (18) ne repose que par endroits sur des nervures (36), saillantes et qui s'étendent transversalement, de la branche (32).

11. Elément de revêtement selon une ou plusieurs des revendications précédentes, caractérisé en ce que la section de maintien supérieure (21) est de section transversale profilée à peu près en équerre, les deux branches (26, 32) qui s'étendent à peu près à angle droit l'une par rapport à l'autre étant reliées entre elles par endroits par des nervures d'appui (33) transversales.

12. Elément de revêtement selon une ou plusieurs des revendications précédentes, caractérisé en ce que la section de maintien inférieure (22) se raccorde, par un cadre de renfort (41), à la face arrière (42) ou au bord inférieur (43) de la coque partielle (20) du logement de roue.

13. Elément de revêtement selon une ou plusieurs des revendications précédentes, caractérisé en ce que sur le côté du support (17), tourné à l'opposé de l'élément de revêtement (3), est fixée une tôle (51) de protection latérale contre la chaleur pour le système de gaz d'échappement (52) disposé au voisinage.

14. Elément de revêtement selon la revendication 13, caractérisé en ce que la tôle (51) de protection contre la chaleur est reliée au support (17) et constitue un ensemble prémonté.

15. Elément de revêtement selon une ou plusieurs des revendications précédentes, caractérisé en ce que sur la coque partielle (20) du logement de roue sont formées par endroits des fentes d'échappement d'air (55), par lesquelles l'air sortant de l'habitacle du véhicule s'échappe dans l'atmosphère.

16. Elément de revêtement selon une ou plusieurs des revendications précédentes, caractérisé en ce que sur le bord supérieur (56) de la coque partielle (20) du logement de roue est emboîté un corps d'étanchéité (57) qui prend appui, contre le couvre-roue côté carrosserie situé au-dessus, par une lèvre d'étanchéité (58).

17. Elément de revêtement selon la revendication 16, caractérisé en ce que le corps d'étanchéité (57) est moulé par injection sur la coque partielle (20) du logement de roue.
